# EUROPÄISCHE PATENTANMELDUNG

(11) **EP 3 651 101 A1**
(43) Veröffentlichungstag der Anmeldung: **13.05.2020**
(21) Anmeldenummer: 18205445.2
(22) Anmeldetag: 09.11.2018
(51) Int. Cl.: G06Q 30/00

(54) **VORRICHTUNG UND VERFAHREN ZUM DYNAMISCHEN ZUWEISEN VON KENNUNGSDATEN FÜR EINE KONFIGURATION EINES PRODUKTKONFIGURATIONSSYSTEMS**

(71) Anmelder: Phoenix Contact GmbH & Co. KG, 32825 Blomberg (DE)
(72) Erfinder: Keller, Peter, 33813 Oerlinghausen (DE); Schmidt, Jörg, 32469 Petershagen (DE); Tieben, Matthias, 32105 Bad Salzuflen (DE)
(74) Vertreter: Maiwald Patent- und Rechtsanwaltsgesellschaft mbH

(57) **Zusammenfassung**

Die vorliegende Erfindung betrifft ein Verfahren zum dynamischen Zuweisen von Kennungsdaten für eine Konfiguration eines Produktkonfigurationssystems, wobei das Verfahren die folgenden Verfahrensschritte umfasst: Erfassen (S1) von einem Konfigurationsdatensatz für die Konfiguration, wobei der Konfigurationsdatensatz Konfigurationseigenschaftsdaten aufweist; Bereitstellen (S2) von einem Variantendatensatz für Variantenkonfigurationen, wobei der Variantendatensatz Artikeleigenschaftsdaten und Kennungsdaten von jedem Artikel einer Vielzahl von Artikeln aufweist; und Vergleichen (S3) des Konfigurationsdatensatzes mit dem Variantendatensatz, wobei im Falle einer Übereinstimmung von Konfigurationseigenschaftsdaten der Konfiguration mit den Artikeleigenschaftsdaten eines bestimmten Artikels des Variantendatensatzes, die Kennungsdaten des bestimmen Artikels des Variantendatensatzes der Konfiguration des Konfigurationsdatensatzes dynamisch zugewiesen werden; und Generieren (S4) einer Artikelreferenznummer im Falle keiner Übereinstimmung von Konfigurationseigenschaften der Konfiguration mit den Artikeleigenschaftsdaten der Variantenkonfigurationen und dynamisches Zuweisen der generierten Artikelreferenznummer zu den Kennungsdaten der Konfiguration.

## Beschreibung

### Technisches Gebiet

Die vorliegende Erfindung betrifft Systeme für die Datentransformation durch standardisierten Transformationsprozessen und entsprechenden Datenmigrationsverfahren für die computerunterstütze Fertigung.

Insbesondere betrifft die vorliegende Erfindung eine Vorrichtung und ein Verfahren zum dynamischen Zuweisen von Kennungsdaten für eine Konfiguration eines Produktkonfigurationssystems.

### Technischer Hintergrund

Heute kann der Kunde für neue Varianten eines Produkts, etwa generiert durch einen Produktkonfigurator, im sogenannten "Customer Self Service", auf Deutsch "Kundenselbstbedienung", meist nur ein Angebot für ein kundenindividuelles Produkt anfordern. Eine direkte Bestellauslösung aus dem Konfigurator ist nicht möglich. Dadurch wird der Datenverarbeitungsprozess im Rechnersystem des Produzenten unnötig verlängert und komplizierter insofern, dass im internen System bzw. Rechnersystem keine Stammdaten zu dieser Konfiguration vorliegen.

Daten zu Produkten liegen in einem Unternehmen im Bereich der Produktbeschaffung, der Produktion und der Distribution oft separiert in den jeweiligen Rechnersystemen voneinander vor. Eine durchgehende Implementierung einer weitreichenden und durchgängig vernetzen und abgeglichenen Datenverfügbarkeit und Datentransformation ist nur schwer möglich.

### Zusammenfassung der Erfindung

Es ist eine Aufgabe der vorliegenden Erfindung, eine verbesserte Vorrichtung und ein verbessertes Verfahren zum dynamischen Zuweisen von Kennungsdaten für eine Konfiguration eines Produktkonfigurationssystems bereitzustellen.

Diese Aufgabe wird durch die Gegenstände der unabhängigen Patentansprüche gelöst. Weiterbildungen und Ausführungsformen sind den abhängigen Patentansprüchen, der Beschreibung und den Figuren der Zeichnungen zu entnehmen.

Ein erster Aspekt der vorliegenden Erfindung betrifft ein Verfahren zum dynamischen Zuweisen von Kennungsdaten für eine Konfiguration eines Produktkonfigurationssystems, wobei das Verfahren die folgenden Verfahrensschritte umfasst.

Als ein erster Verfahrensschritt erfolgt ein Erfassen von einem Konfigurationsdatensatz für die Konfiguration, wobei der Konfigurationsdatensatz Konfigurationseigenschaftsdaten aufweist.

Als ein zweiter Verfahrensschritt erfolgt ein Bereitstellen von einem Variantendatensatz für Variantenkonfigurationen, wobei der Variantendatensatz Artikeleigenschaftsdaten und Kennungsdaten von jedem Artikel einer Vielzahl von Artikeln aufweist.

Als ein dritter Verfahrensschritt erfolgt ein Vergleichen des Konfigurationsdatensatzes mit dem Variantendatensatz, wobei im Falle einer Übereinstimmung von Konfigurationseigenschaftsdaten der Konfiguration mit den Artikeleigenschaftsdaten eines bestimmten Artikels des Variantendatensatzes, die Kennungsdaten des bestimmen Artikels des Variantendatensatzes der Konfiguration des Konfigurationsdatensatzes dynamisch zugewiesen werden.

Als ein vierter Verfahrensschritt erfolgt ein Generieren einer Artikelreferenznummer im Falle keiner Übereinstimmung von Konfigurationseigenschaften der Konfiguration mit den Artikeleigenschaftsdaten der Variantenkonfigurationen und dynamisches Zuweisen der generierten Artikelreferenznummer, etwa beispielsweise aus dem internen PLM-System, das für die Verwaltung von Materialnummern verantwortlich ist, zu den Kennungsdaten der Konfiguration.

Die vorliegende Erfindung ermöglicht, Daten aus einem Produktkonfigurator per Transformationsmodell in standardisierte interne Material- und Werteflüsse umzuwandeln und Ergebnisse von dort wieder zurück in den Konfigurationskontext zu überführen.

Die vorliegende Erfindung ermöglicht, dass Kennungsdaten für eine Konfiguration eines Produktkonfigurationssystems dynamisch zugewiesen werden, für die zum Zeitpunkt der Konfigurationszusammenstellung durch den Kunden keine systemseitigen Stammdaten für die kundenindividuelle Konfiguration vorliegen.

Die vorliegende Erfindung ermöglicht, dass der Anwender jede mögliche Konfiguration gemäß Produktmodell direkt bewerten kann und dabei eine Materialnummer automatisiert erhalten kann. Somit ist er direkt aus dem Kontext der Konfiguration in der Lage, den Bestellvorgang für sein individuelles Produkt unmittelbar auszulösen.

Die vorliegende Erfindung erreicht das Ziel, unmittelbar und direkt die Materialnummer über einen elektronischen Dienst zu erzeugen und in den Konfigurationsprozess zu visualisieren.

Die vollständige Ausprägung von allen Materialstammdaten für die Konfiguration kann zu einem späteren Zeitpunkt erfolgen.

Das Transformationsmodell überträgt automatisiert - zumindest teilweise oder vollständig - umfangreiche Datenpakete in nahezu alle für die Auftragsabwicklung und Fertigung eines Produktes relevanten Systeme und stellt damit eine Kerntechnologie zur intelligenten Produktion dar.

Das Verfahren der vorliegenden Erfindung nutzt dabei keine eigene Programmlogik, sondern arbeitet beispielsweise auf der Grundlage von semantischen Beziehungen, die in den Standardfunktionen der beteiligten Systeme vorliegt, etwa ein Webkonfigurator, ein Webshop, ein Simulationssystem, Enterprise-Resource-Planning-System, ein Produktionsleitsystem, oder ein Montagehilfsautomat. Dadurch entstehen insbesondere im Kontext Industrie 4.0 eine Reihe von Verbesserungen für kundenindividuelle Produktkonfigurationen.

Die vorliegende Erfindung ermöglicht vorteilhaft, die Standardisierung von Abläufen auch in heterogenen IT-Infrastrukturen und die Gewährleistung der digitalen Durchgängigkeit in heterogenen IT-Infrastrukturen zu realisieren.

Die vorliegende Erfindung ermöglicht vorteilhaft, dass jede beliebige konfigurierte Lösung auch digital und unmittelbar vom Kunden bestellbar ist, auch wenn diese konfigurierten Lösungen bisher in den Fertigungssystemen noch nicht produziert wurde und als solche noch nicht existiert.

Durch die Automatisierung der Materialanlage während des Bestellvorgangs werden die internen Aufwände deutlich reduziert und die Durchlaufzeiten für Fertigungsaufträge werden deutlich minimiert.

Durch Standardisierung und Automatisierung verbessert sich die Datenqualität im Unternehmen. Das Transformationsmodell umfasst ein Verfahren zur Umwandlung von Daten aus der digitalen Kundenschnittstelle, auch als Webkonfigurator bezeichnet, in standardisierte interne Material- und Werteflüsse, um damit die automatisierte Steuerung von Maschinen, Anlagen, Produktionsprozessen zu steuern.

Vorteilhafte Ausgestaltungen der vorliegenden Erfindung sind den Unteransprüchen zu entnehmen.

In einer vorteilhaften Ausführungsform der vorliegenden Erfindung ist vorgesehen, dass wobei die generierte Artikelreferenznummer in dem Variantendatensatz als eine neue Variantenkonfiguration dynamisch abgespeichert wird.

In einer vorteilhaften Ausführungsform der vorliegenden Erfindung ist vorgesehen, dass die generierte Artikelreferenznummer durch eine Verknüpfung der Konfigurationseigenschaften der Konfiguration mit den Artikeleigenschaftsdaten der Variantenkonfigurationen generiert wird und/oder sequentiell vergeben wird.

In einer vorteilhaften Ausführungsform der vorliegenden Erfindung ist vorgesehen, dass der Konfigurationsdatensatz Konfigurationsstammdaten umfasst und/oder wobei die Kennungsdaten eine Artikelreferenznummer umfassen.

In einer vorteilhaften Ausführungsform der vorliegenden Erfindung ist vorgesehen, dass der Variantendatensatz Variantenstammdaten von einem Artikel umfasst.

In einer vorteilhaften Ausführungsform der vorliegenden Erfindung ist vorgesehen, dass im Falle der Übereinstimmung der Konfigurationseigenschaftsdaten der Konfiguration mit den Artikeleigenschaftsdaten des Variantendatensatzes, die Variantenstammdaten des Variantendatensatzes dem Konfigurationsdatensatz als Konfigurationsstammdaten dynamisch zugewiesen werden.

In einem zweiten Aspekt der vorliegenden Erfindung ist eine Vorrichtung zum dynamischen Zuweisen von Kennungsdaten für eine Konfiguration eines Produktkonfigurationssystems vorgesehen, wobei die Vorrichtung ein Erfassungsmodul, eine Variantendatenbank und ein Datenverarbeitungsmodul umfasst.

Das Erfassungsmodul ist dazu ausgebildet, einen Konfigurationsdatensatz für die Konfiguration zu erfassen, wobei der Konfigurationsdatensatz Konfigurationseigenschaftsdaten aufweist.

Die Variantendatenbank ist dazu ausgebildet, einen Variantendatensatz für Variantenkonfigurationen bereitzustellen, wobei der Variantendatensatz Artikeleigenschaftsdaten und Kennungsdaten von jedem Artikel einer Vielzahl von Artikeln aufweist.

Das Datenverarbeitungsmodul ist dazu ausgebildet ist, den Konfigurationsdatensatz mit dem Variantendatensatz der Variantenkonfigurationen zu vergleichen, wobei das Datenverarbeitungsmodul ferner dazu ausgebildet ist, im Falle einer Übereinstimmung von Konfigurationseigenschaftsdaten der Konfiguration mit den Artikeleigenschaftsdaten eines bestimmten Artikels des Variantendatensatzes, die Kennungsdaten des bestimmen Artikels des Variantendatensatzes der Konfiguration des Konfigurationsdatensatzes dynamisch zuzuweisen, und im Falle keiner Übereinstimmung der Konfigurationseigenschaftsdaten der Konfiguration mit den Artikeleigenschaftsdaten des Variantendatensatzes eine Artikelreferenznummer zu generieren und der Konfiguration die generierte Artikelreferenznummer dynamisch zuzuweisen.

In einer vorteilhaften Ausführungsform der vorliegenden Erfindung ist vorgesehen, dass die Variantendatenbank dazu ausgebildet ist, die generierte Artikelreferenznummer in dem Variantendatensatz als eine neue Variantenkonfiguration dynamisch abzuspeichern.

In einer vorteilhaften Ausführungsform der vorliegenden Erfindung ist vorgesehen, dass das Datenverarbeitungsmodul dazu ausgebildet ist, die generierte Artikelreferenznummer durch eine Verknüpfung der Konfigurationseigenschaften der Konfiguration mit den Artikeleigenschaftsdaten der Variantenkonfigurationen zu generieren und/oder die generierte Artikelreferenznummer sequentiell zu vergeben.

In einer vorteilhaften Ausführungsform der vorliegenden Erfindung ist vorgesehen, dass der Konfigurationsdatensatz Konfigurationsstammdaten umfasst und/oder wobei die Kennungsdaten eine Artikelreferenznummer umfassen.

In einer vorteilhaften Ausführungsform der vorliegenden Erfindung ist vorgesehen, dass der Variantendatensatz Variantenstammdaten von einem Artikel umfasst.

In einem dritten Aspekt der vorliegenden Erfindung ist ein Rechnernetzsystem vorgesehen, umfassend die Vorrichtung gemäß dem zweiten Aspekt der vorliegenden Erfindung oder einer beliebigen Ausführungsform des zweiten Aspekts.

In einem vierten Aspekt der vorliegenden Erfindung ist ein Computerprogramm oder Computerprogrammprodukt vorgesehen, umfassend Befehle, die bei der Ausführung des Programms durch einen Computer diesen veranlassen, die Schritte des Verfahrens zum dynamischen Zuweisen von Kennungsdaten für eine Konfiguration eines Produktkonfigurationssystems gemäß dem ersten Aspekt der vorliegenden Erfindung auszuführen.

In einem fünften Aspekt der vorliegenden Erfindung ist ein Computerlesbares (Speicher)medium vorgesehen, umfassend Befehle, die bei der Ausführung durch einen Computer diesen veranlassen, die Schritte des Verfahrens zum dynamischen Zuweisen von Kennungsdaten für eine Konfiguration eines Produktkonfigurationssystems gemäß dem ersten Aspekt der vorliegenden Erfindung auszuführen.

Die vorliegende Erfindung ermöglicht, für einen Produktkonfigurator eine automatisierte Material- und Artikelanlage zu ermöglichen.

Die automatisierte Erzeugung von strukturierten digitalen Daten ermöglicht es, die Prozesskette von der digitalen Kundenschnittstelle bis zur Fertigung vollständig zu automatisieren basierend auf einer autonomen Datengenerierung und Datenverwaltung.

In einem sechsten Aspekt der vorliegenden Erfindung ist ein Client-Server-Verfahren zum dynamischen Zuweisen von Kennungsdaten für eine kundenindividuelle Konfiguration eines Produktkonfigurationssystems eines Rechnernetzsystems bereitzustellen, bei dem eine Vielzahl von dezentralen Datenverarbeitungseinrichtungen über ein Datennetz in einer Datenübertragungsverbindung verbunden werden.

Ferner ist bei dem Client-Server-Verfahren vorgesehen, dass in einer dezentralen Datenverarbeitungseinrichtung mindestens eine Variantendatenbank abgespeichert wird, welche einen Variantendatensatz für Variantenkonfigurationen bereitstellt; wobei der Variantendatensatz Artikeleigenschaftsdaten und Kennungsdaten von einem Artikel enthält.

Ferner ist bei dem Client-Server-Verfahren vorgesehen, dass zu jedem Artikel der Vielzahl von Artikeln ein Variantendatensatz definiert wird.

Ferner ist bei dem Client-Server-Verfahren vorgesehen, dass Konfigurationseigenschaften der kundenindividuellen Konfiguration in Form von einem Konfigurationsdatensatz erfasst werden, wobei der Konfigurationsdatensatz Konfigurationseigenschaftsdaten enthält.

Ferner ist bei dem Client-Server-Verfahren vorgesehen, dass der Konfigurationsdatensatz der kundenindividuellen Konfiguration mit dem Variantendatensatz der Variantenkonfigurationen verglichen wird.

Ferner ist bei dem Client-Server-Verfahren vorgesehen, dass im Falle einer Übereinstimmung von Konfigurationseigenschaftsdaten der kundenindividuellen Konfiguration mit den Artikeleigenschaftsdaten des Variantendatensatzes die Kennungsdaten des Variantendatensatzes der kundenindividuellen Konfiguration des Konfigurationsdatensatzes zugewiesen wird.

Ferner ist bei dem Client-Server-Verfahren vorgesehen, dass im Falle keiner Übereinstimmung der Konfigurationseigenschaftsdaten der Konfiguration mit den Artikeleigenschaftsdaten des Variantendatensatzes eine Artikelreferenznummer generiert wird und der Konfiguration die generierte Artikelreferenznummer dynamisch zugewiesen wird.

Die beschriebenen Ausgestaltungen und Weiterbildungen lassen sich beliebig miteinander kombinieren.

Weitere mögliche Ausgestaltungen, Weiterbildungen und Implementierungen der vorliegenden Erfindung umfassen auch nicht explizit genannte Kombinationen von zuvor oder im Folgenden bezüglich der Ausführungsformen beschriebenen Merkmale der vorliegenden Erfindung.

Die beiliegenden Zeichnungen sollen ein weiteres Verständnis der Ausführungsformen der vorliegenden Erfindung vermitteln.

Die beiliegenden Zeichnungen veranschaulichen Ausführungsformen und dienen im Zusammenhang mit der Beschreibung der Erklärung von Konzepten der vorliegenden Erfindung.

Andere Ausführungsformen und viele der genannten Vorteile ergeben sich im Hinblick auf die Figuren der Zeichnungen. Die dargestellten Elemente der Figuren der Zeichnungen sind nicht notwendigerweise maßstabsgetreu zueinander gezeigt.

### Kurze Beschreibung der Figuren

Es zeigen:
- Fig. 1:: eine schematische Darstellung einer Vorrichtung zum dynamischen Zuweisen von Kennungsdaten für eine Konfiguration eines Produktkonfigurationssystems gemäß einem Ausführungsbeispiel der vorliegenden Erfindung;
- Fig. 2:: eine schematische Darstellung eines Flussdiagramms eines Verfahrens zum dynamischen Zuweisen von Kennungsdaten für eine Konfiguration eines Produktkonfigurationssystems gemäß einem Ausführungsbeispiel der vorliegenden Erfindung;
- Fig. 3: eine schematische Darstellung einer Vorrichtung zum Umwandeln von Daten aus einer digitalen Kundenschnittstelle eines Rechnernetzsystems gemäß einem Ausführungsbeispiel der vorliegenden Erfindung;
- Fig. 4: einen Abgleich des Konfigurationsergebnisses mit bekannten Artikeln gemäß einem Ausführungsbeispiel der vorliegenden Erfindung;
- Fig. 5: eine Erweiterung des Katalogs der Variantendatenbank gemäß einem Ausführungsbeispiel der vorliegenden Erfindung;
- Fig. 6: eine Anfrage und eine Ablage neu generierter Materialnummern gemäß einem Ausführungsbeispiel der vorliegenden Erfindung; und
- Fig. 7: einen angepasster Update-Prozess für den bekannten Artikelstamm der Variantendatenbank gemäß einem Ausführungsbeispiel der vorliegenden Erfindung.

### Detaillierte Beschreibung der Ausführungsbeispiele

In den Figuren der Zeichnungen bezeichnen gleiche Bezugszeichen gleiche oder funktionsgleiche Elemente, Bauteile, Komponenten oder Verfahrensschritte, soweit nichts Gegenteiliges angegeben ist.

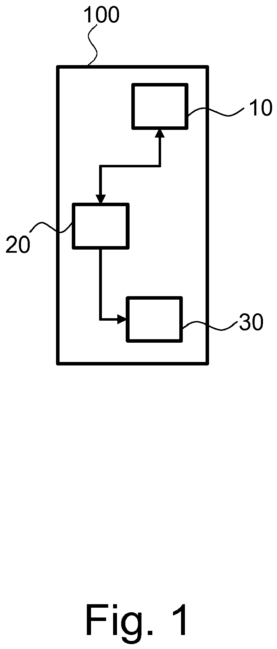

Die Fig. 1 zeigt eine schematische Darstellung einer Vorrichtung zum dynamischen Zuweisen von Kennungsdaten für eine Konfiguration eines Produktkonfigurationssystems gemäß einem Ausführungsbeispiel der vorliegenden Erfindung.

Die Vorrichtung 100 umfasst ein Erfassungsmodul 10, eine Variantendatenbank 20, und ein Datenverarbeitungsmodul 30.

Das Erfassungsmodul 10 ist dazu ausgebildet, Konfigurationseigenschaften der Konfiguration in Form von einem Konfigurationsdatensatz zu erfassen, wobei der Konfigurationsdatensatz Konfigurationseigenschaftsdaten enthält.

Die Variantendatenbank 20 ist dazu ausgebildet, einen Variantendatensatz für Variantenkonfigurationen bereitzustellen, wobei der Variantendatensatz Artikeleigenschaftsdaten und Kennungsdaten von einem Artikel der Vielzahl von Artikeln der Variantenkonfigurationen definiert.

Das Datenverarbeitungsmodul 30 ist dazu ausgebildet, den Konfigurationsdatensatz mit dem Variantendatensatz der Variantenkonfigurationen zu vergleichen, wobei das Datenverarbeitungsmodul ferner dazu ausgebildet ist, im Falle einer Übereinstimmung von Konfigurationseigenschaftsdaten der Konfiguration mit den Artikeleigenschaftsdaten des Variantendatensatzes, die Kennungsdaten des Variantendatensatzes der Konfiguration des Konfigurationsdatensatzes dynamisch zuzuweisen, und im Falle keiner Übereinstimmung der Konfigurationseigenschaftsdaten der Konfiguration mit den Artikeleigenschaftsdaten des Variantendatensatzes eine Artikelreferenznummer zu generieren und der Konfiguration die generierte Artikelreferenznummer dynamisch zuzuweisen.

Die Vorrichtung 100 ermöglicht, die Lieferkette der Informationen für die Abwicklung von Aufträgen in der Form zu optimieren, dass Aufträge möglichst automatisiert verarbeitet werden.

Die Vorrichtung 100 kann hierfür optimierte Konfiguratoren und Services anbieten, die im Rahmen der Kommunikation mit dem Kunden bedarfsgerechte und aktuelle Informationen zu den Produkten bereitstellen.

Die vertikale Integration der Vorrichtung 100 ist von Vorteil, da hierdurch die Vernetzung zwischen Kundeanforderung und Definition von Auftragsinhalten mit der Fertigung umgesetzt wird und so die horizontale Wertschöpfungskette optimiert begleitet wird.

Die Vorrichtung 100 ist dazu ausgebildet, hierfür die Möglichkeit der Erzeugung von Materialnummer bereitzustellen und deren Ausprägung auf Basis der Konfigurationsergebnisse aus einer Wissensbasis wie in der Variantendatenbank 20 abgespeichert abzuleiten.

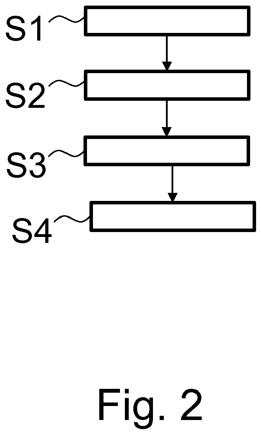

Die Fig. 2 eine schematische Darstellung eines Flussdiagramms eines Verfahrens zum dynamischen Zuweisen von Kennungsdaten für eine Konfiguration eines Produktkonfigurationssystems gemäß einem Ausführungsbeispiel der vorliegenden Erfindung.

Als ein erster Verfahrensschritt erfolgt ein Erfassen S1 von einem Konfigurationsdatensatz für die Konfiguration, wobei der Konfigurationsdatensatz Konfigurationseigenschaftsdaten aufweist.

Als ein zweiter Verfahrensschritt erfolgt ein Bereitstellen S2 von einem Variantendatensatz für Variantenkonfigurationen, wobei der Variantendatensatz Artikeleigenschaftsdaten und Kennungsdaten von jedem Artikel einer Vielzahl von Artikeln aufweist.

Als ein dritter Verfahrensschritt erfolgt ein Vergleichen S3 des Konfigurationsdatensatzes mit dem Variantendatensatz, wobei im Falle einer Übereinstimmung von Konfigurationseigenschaftsdaten der Konfiguration mit den Artikeleigenschaftsdaten eines bestimmten Artikels des Variantendatensatzes, die Kennungsdaten des bestimmen Artikels des Variantendatensatzes der Konfiguration des Konfigurationsdatensatzes dynamisch zugewiesen werden; und

Als ein vierter Verfahrensschritt erfolgt ein Generieren S4 einer Artikelreferenznummer im Falle keiner Übereinstimmung von Konfigurationseigenschaften der Konfiguration mit den Artikeleigenschaftsdaten der Variantenkonfigurationen und dynamisches Zuweisen der generierten Artikelreferenznummer zu den Kennungsdaten der Konfiguration.

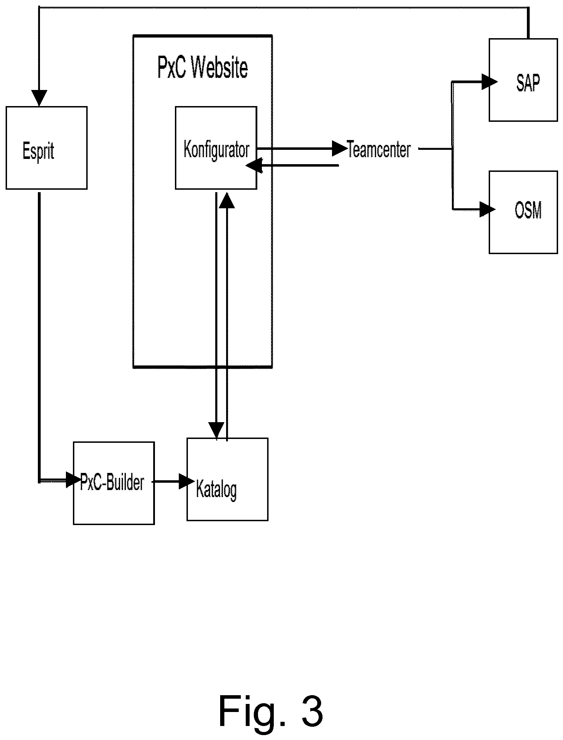

Die Fig. 3 zeigt eine schematische Darstellung einer Vorrichtung zum Umwandeln von Daten aus einer digitalen Kundenschnittstelle eines Rechnernetzsystems gemäß einem Ausführungsbeispiel der vorliegenden Erfindung.

Folgende Systeme sind in den Prozess integriert und können mit der Vorrichtung 100 gekoppelt werden.

Ein Baukasten-Konfigurator für die kundenindividuelle Produktkonfiguration kann in das Erfassungsmodul 10 der Vorrichtung 100 integriert sein oder mit dem Erfassungsmodul 10 gekoppelt werden und eine kundenindividuelle Produktkonfiguration und Angebotserstellung per Produktkonfigurator ermöglichen.

Ein Anwendungsserver als Plattform für Integrationsprozesse kann mit der Vorrichtung 100 gekoppelt werden oder in das Datenverarbeitungsmodul 30 integriert sein.

Die Vorrichtung 100 kann ferner mit einer "Product-Lifecycle-Management", PLM, Software gekoppelt werden oder eine PLM Applikation kann in das Datenverarbeitungsmodul 30 integriert sein.

Die Vorrichtung 100 kann ferner mit einer Software zur Steuerung von Geschäftsprozesse eines Unternehmens wie Buchführung, Controlling, Vertrieb, Einkauf, Produktion, Lagerhaltung und Personalwesen gekoppelt werden oder eine solche Softwarearchitektur kann in das Datenverarbeitungsmodul 30 integriert sein.

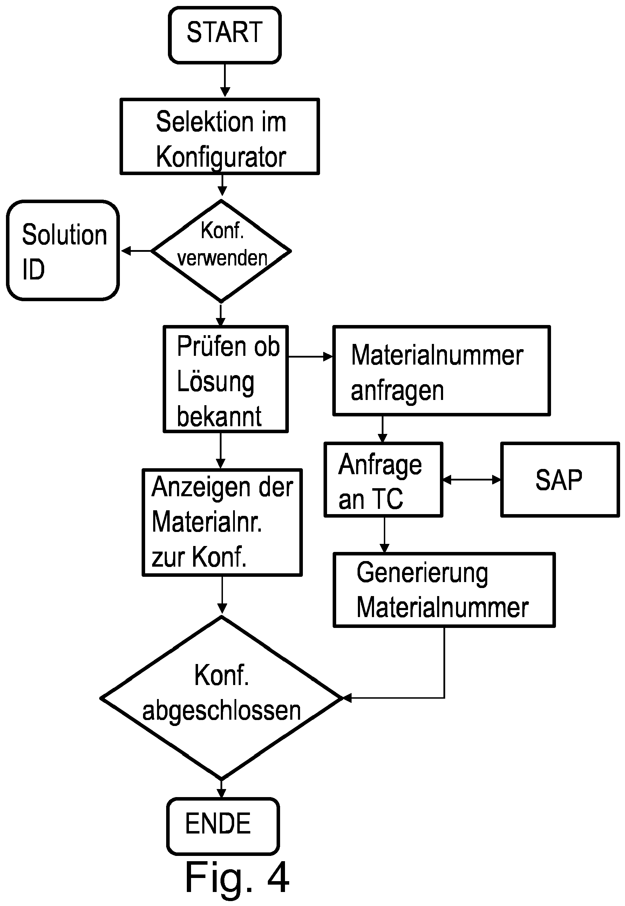

Die Fig. 4 zeigt einen Abgleich des Konfigurationsergebnisses mit bekannten Artikeln gemäß einem Ausführungsbeispiel der vorliegenden Erfindung.

Das Konfigurationsergebnis wird vom Datenverarbeitungsmodul 30 mit dem Inhalt des Katalogs verglichen. Dafür wird die Liste der im Konfigurator bewerteten Merkmale übergeben und mit allen bekannten Artikeln verglichen.

Ist bereits ein Eintrag mit genau der angefragten Wertekombination vorhanden, so wird aus der Datenbank der Variantendatenbank 20 die Materialnummer ausgelesen und an den Konfigurator zurückgegeben ("Konfiguration bereits in Referenzdatenbank hinterlegt").

Ist diese Wertekombination hingegen nicht bekannt, so wird entsprechend keine Materialnummer zurück geliefert.

Dabei wird die vorhandene Datenstruktur im Katalog der Variantendatenbank 20 um eine Spalte erweitert, welche den Status der bekannten Artikel angibt.

Handelt es sich um einen vertriebsfähigen Artikel, so steht hier der Wert "Verifiziert", ansonsten ist es der Status "Anfrage". Dieser Status ermöglicht es, im Konfigurator dem Anwender gegenüber unterschiedlich zu reagieren.

Ein noch nicht vertriebsfähiger Artikel kann nicht direkt in den Warenkorb, sondern lediglich angefragt werden. Dem Kunden kann entsprechend des Status des gefundenen Artikels entweder die Option "in den Warenkorb" oder "Artikel anfragen" angezeigt werden.

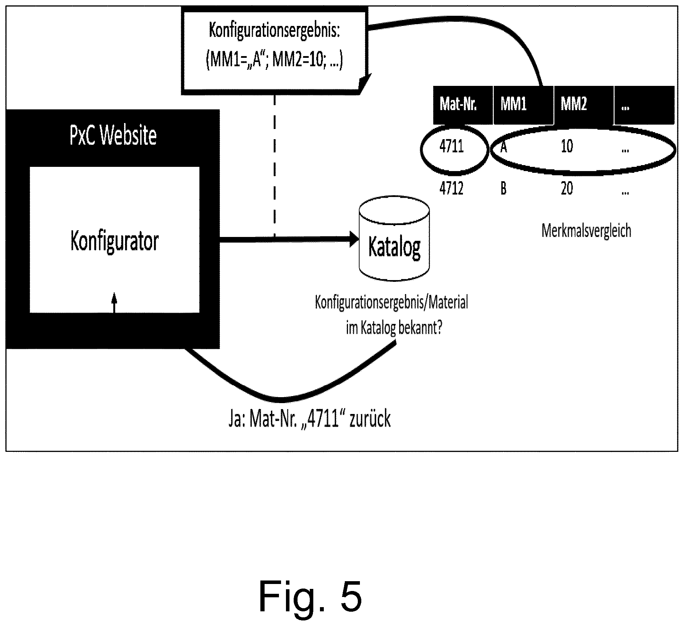

Die Fig. 5 zeigt eine Erweiterung des Katalogs der Variantendatenbank 20 gemäß einem Ausführungsbeispiel der vorliegenden Erfindung.

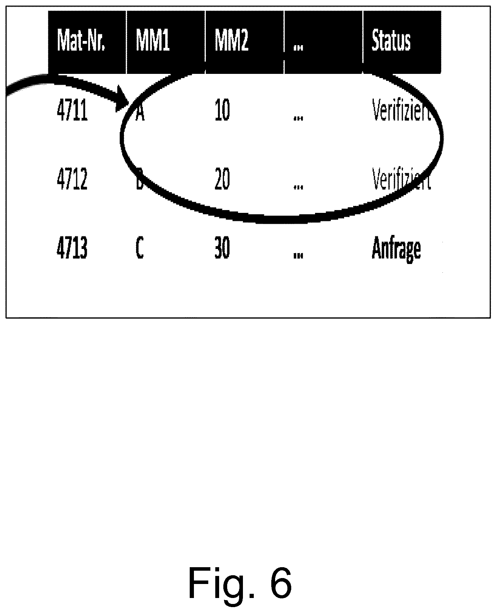

Die Fig. 6 zeigt eine Anfrage und eine Ablage neu generierter Materialnummern gemäß einem Ausführungsbeispiel der vorliegenden Erfindung.

Wird eine Konfiguration angefragt, so wird eine neue Materialnummer vergeben und an den Konfigurator zurück geliefert. Diese wird zum Abgleich mit späteren Konfigurationsergebnissen direkt vom Konfigurator im Katalog abgelegt.

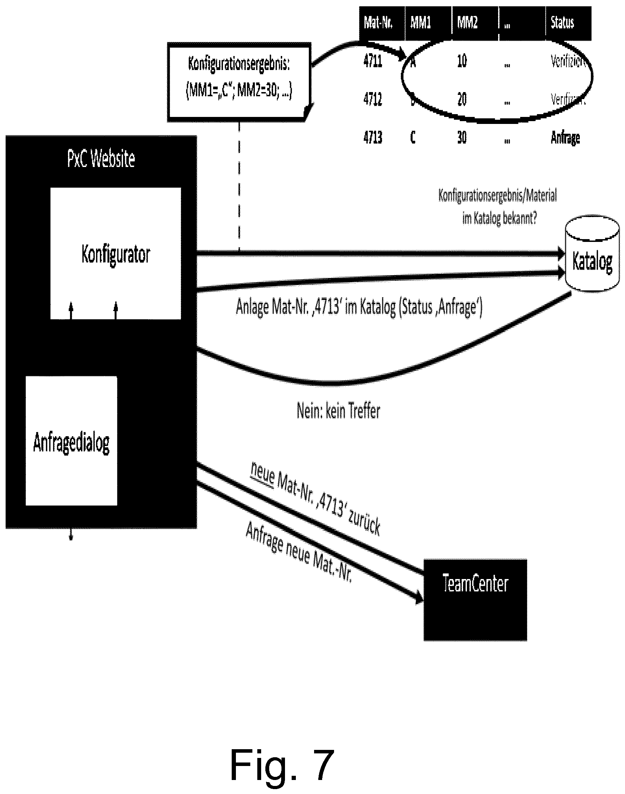

Die Fig. 7 zeigt einen angepasster Update-Prozess für den bekannten Artikelstamm der Variantendatenbank 20 gemäß einem Ausführungsbeispiel der vorliegenden Erfindung.

Der Inhalt des Katalogs der Variantendatenbank 20 wird mit aktuellen Produktstammdaten versorgt. Dies funktioniert bei nicht-erfindungsgemäßen Verfahren über ein manuelles Anstoßen eines eigens hierfür implementierten Softwaremoduls.

Dabei wird eine XML-Datei mit dem kompletten Inhalt der Stammdaten ausgeleitet. Das Softwaremodul erstellt daraus, auch unter Zuhilfenahme anderer Quellen, eine Datei in einem vordefinierten XML-Format. Diese wird nachfolgend in den Katalog der Variantendank importiert, indem der komplette Inhalt ausgetauscht wird.

Die vorliegende Erfindung ermöglicht hier einen vollautomatisierten Datenaustausch, ein autonom erfolgender Import in einen Delta-Abgleich geändert werden, sodass im Katalog nur noch die neuen oder geänderten Artikel importiert werden müssen.

Neue Artikel bekommen einen neu automatisch generierten Eintrag, mit dem Status "Verifiziert", geänderte Artikel werden mit dem aktuellen Inhalt überschrieben.

Sollte ein Artikel den Status "Anfrage" gehabt haben und wird dieser über diesen Weg aktualisiert, es ändert sich der Status in "Verifiziert".

Die vorliegende Erfindung ermöglicht also anstelle eines Komplett-Update ein Delta-Update der Variantenbank vorzunehmen.

Um das Delta-Update zu ermitteln, wird der jeweils letzte Komplett-Export mit dem aktuellen Export verglichen. Das bedeutet, dass immer zwei Zustände gespeichert werden. Die vom Katalog zu importierende Datei wird auf diese Weise zukünftig deutlich kleiner werden, sodass zusätzlich auch weniger Einschränkungen des Laufzeitbetriebs zu erwarten sind.

Gemäß einer Ausführungsform der vorliegenden Erfindung ist ein Verfahren vorgesehen, ein Client-Server-Verfahren zum dynamischen Zuweisen von Kennungsdaten für eine kundenindividuelle Konfiguration eines Produktkonfigurationssystems eines Rechnernetzsystems bereitzustellen, bei dem eine Vielzahl von dezentralen Datenverarbeitungseinrichtungen über ein Datennetz in einer Datenübertragungsverbindung verbunden werden.

Gemäß einer Ausführungsform der vorliegenden Erfindung ist vorgesehen, dass in einer dezentralen Datenverarbeitungseinrichtung mindestens eine Variantendatenbank abgespeichert wird, welche einen Variantendatensatz für Variantenkonfigurationen bereitstellt; wobei der Variantendatensatz Artikeleigenschaftsdaten und Kennungsdaten von einem Artikel enthält.

Gemäß einer Ausführungsform der vorliegenden Erfindung ist vorgesehen, dass zu jedem Artikel der Vielzahl von Artikeln ein Variantendatensatz definiert wird.

Gemäß einer Ausführungsform der vorliegenden Erfindung ist vorgesehen, dass Konfigurationseigenschaften der kundenindividuellen Konfiguration in Form von einem Konfigurationsdatensatz erfasst werden, wobei der Konfigurationsdatensatz Konfigurationseigenschaftsdaten enthält.

Gemäß einer Ausführungsform der vorliegenden Erfindung ist vorgesehen, dass der Konfigurationsdatensatz der kundenindividuellen Konfiguration mit dem Variantendatensatz der Variantenkonfigurationen verglichen wird.

Gemäß einer Ausführungsform der vorliegenden Erfindung ist vorgesehen, dass im Falle einer Übereinstimmung von Konfigurationseigenschaftsdaten der kundenindividuellen Konfiguration mit den Artikeleigenschaftsdaten des Variantendatensatzes die Kennungsdaten des Variantendatensatzes der kundenindividuellen Konfiguration des Konfigurationsdatensatzes zugewiesen wird

Gemäß einer Ausführungsform der vorliegenden Erfindung ist vorgesehen, dass im Falle keiner Übereinstimmung der Konfigurationseigenschaftsdaten der Konfiguration mit den Artikeleigenschaftsdaten des Variantendatensatzes eine Artikelreferenznummer generiert wird und der Konfiguration die generierte Artikelreferenznummer dynamisch zugewiesen wird.

Obwohl die vorliegende Erfindung anhand bevorzugter Ausführungsbeispiele vorstehend beschrieben wurde, ist sie nicht darauf beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

Ergänzend sei darauf hingewiesen, dass "umfassend" und "aufweisend" keine anderen Elemente oder Schritte ausschließt und "eine" oder "ein" keine Vielzahl ausschließt.

## Patentansprüche

1. Verfahren zum dynamischen Zuweisen von Kennungsdaten für eine Konfiguration eines Produktkonfigurationssystems, wobei das Verfahren die folgenden Verfahrensschritte umfasst:
- Erfassen (S1) von einem Konfigurationsdatensatz für die Konfiguration, wobei der Konfigurationsdatensatz Konfigurationseigenschaftsdaten aufweist;
- Bereitstellen (S2) von einem Variantendatensatz für Variantenkonfigurationen, wobei der Variantendatensatz Artikeleigenschaftsdaten und Kennungsdaten von jedem Artikel einer Vielzahl von Artikeln aufweist; und
- Vergleichen (S3) des Konfigurationsdatensatzes mit dem Variantendatensatz, wobei im Falle einer Übereinstimmung von Konfigurationseigenschaftsdaten der Konfiguration mit den Artikeleigenschaftsdaten eines bestimmten Artikels des Variantendatensatzes, die Kennungsdaten des bestimmen Artikels des Variantendatensatzes der Konfiguration des Konfigurationsdatensatzes dynamisch zugewiesen werden; und
- Generieren (S4) einer Artikelreferenznummer im Falle keiner Übereinstimmung von Konfigurationseigenschaften der Konfiguration mit den Artikeleigenschaftsdaten der Variantenkonfigurationen und dynamisches Zuweisen der generierten Artikelreferenznummer zu den Kennungsdaten der Konfiguration.

2. Verfahren nach Patentanspruch 1,
wobei die generierte Artikelreferenznummer in dem Variantendatensatz als eine neue Variantenkonfiguration dynamisch abgespeichert wird.

3. Verfahren nach Patentanspruch 1 oder 2,
wobei die generierte Artikelreferenznummer durch eine Verknüpfung der Konfigurationseigenschaften der Konfiguration mit den Artikeleigenschaftsdaten der Variantenkonfigurationen generiert wird und/oder sequentiell vergeben wird.

4. Verfahren nach einem der vorherigen Patentansprüche,
wobei der Konfigurationsdatensatz Konfigurationsstammdaten umfasst und/oder wobei die Kennungsdaten eine Artikelreferenznummer umfassen.

5. Verfahren nach einem der vorherigen Patentansprüche,
wobei der Variantendatensatz Variantenstammdaten von einem Artikel umfasst.

6. Verfahren nach einem der vorherigen Patentansprüche,
wobei im Falle der Übereinstimmung der Konfigurationseigenschaftsdaten der Konfiguration mit den Artikeleigenschaftsdaten des Variantendatensatzes, die Variantenstammdaten des Variantendatensatzes dem Konfigurationsdatensatz als Konfigurationsstammdaten dynamisch zugewiesen werden.

7. Vorrichtung (100) zum dynamischen Zuweisen von Kennungsdaten für eine Konfiguration eines Produktkonfigurationssystems, wobei die Vorrichtung umfasst:
- ein Erfassungsmodul (10), welches dazu ausgebildet ist, einen Konfigurationsdatensatz für die Konfiguration zu erfassen, wobei der Konfigurationsdatensatz Konfigurationseigenschaftsdaten aufweist;
- eine Variantendatenbank (20), welche dazu ausgebildet ist, einen Variantendatensatz für Variantenkonfigurationen bereitzustellen, wobei der Variantendatensatz Artikeleigenschaftsdaten und Kennungsdaten von jedem Artikel einer Vielzahl von Artikeln aufweist; und
- ein Datenverarbeitungsmodul (30), welches dazu ausgebildet ist, den Konfigurationsdatensatz mit dem Variantendatensatz der Variantenkonfigurationen zu vergleichen, wobei das Datenverarbeitungsmodul ferner dazu ausgebildet ist, im Falle einer Übereinstimmung von Konfigurationseigenschaftsdaten der Konfiguration mit den Artikeleigenschaftsdaten eines bestimmten Artikels des Variantendatensatzes, die Kennungsdaten des bestimmen Artikels des Variantendatensatzes der Konfiguration des Konfigurationsdatensatzes dynamisch zuzuweisen, und im Falle keiner Übereinstimmung der Konfigurationseigenschaftsdaten der Konfiguration mit den Artikeleigenschaftsdaten des Variantendatensatzes eine Artikelreferenznummer zu generieren und der Konfiguration die generierte Artikelreferenznummer dynamisch zuzuweisen.

8. Vorrichtung nach Patentanspruch 7,
wobei die Variantendatenbank dazu ausgebildet ist, die generierte Artikelreferenznummer in dem Variantendatensatz als eine neue Variantenkonfiguration dynamisch abzuspeichern.

9. Vorrichtung nach Patentanspruch 7 oder 8,
wobei das Datenverarbeitungsmodul dazu ausgebildet ist, die generierte Artikelreferenznummer durch eine Verknüpfung der Konfigurationseigenschaften der Konfiguration mit den Artikeleigenschaftsdaten der Variantenkonfigurationen zu generieren und/oder die generierte Artikelreferenznummer sequentiell zu vergeben.

10. Vorrichtung nach einem der Patentansprüche 7 bis 9,
wobei der Konfigurationsdatensatz Konfigurationsstammdaten umfasst und/oder wobei die Kennungsdaten eine Artikelreferenznummer umfassen.

11. Vorrichtung nach einem der Patentansprüche 7 bis 10,
wobei der Variantendatensatz Variantenstammdaten von einem Artikel umfasst.

12. Rechnernetzsystem, umfassend eine Vorrichtung nach einem der Patentansprüche 7 bis 11.

13. Rechnernetzsystem nach Patentanspruch 12,
wobei das Rechnernetzsystem einen Webkonfigurator, einen Webshop, ein Simulationssystem, Enterprise-Resource-Planning-System, ein Produktionsleitsystem, oder einen Montagehilfsautomat umfasst.

14. Rechnernetzsystem nach Patentanspruch 12 oder 13,
wobei das Rechnernetzsystem als ein heterogenes IT-System ausgebildet ist.

15. Client-Server-Verfahren zum dynamischen Zuweisen von Kennungsdaten für eine kundenindividuelle Konfiguration eines Produktkonfigurationssystems eines Rechnernetzsystems, bei dem eine Vielzahl von dezentralen Datenverarbeitungseinrichtungen über ein Datennetz in einer Datenübertragungsverbindung verbunden werden;
wobei in einer dezentralen Datenverarbeitungseinrichtung mindestens eine Variantendatenbank abgespeichert wird, welche einen Variantendatensatz für Variantenkonfigurationen bereitstellt;
wobei der Variantendatensatz Artikeleigenschaftsdaten und Kennungsdaten von einem Artikel enthält, wobei zu jedem Artikel der Vielzahl von Artikeln ein Variantendatensatz definiert wird;
wobei Konfigurationseigenschaften der kundenindividuellen Konfiguration in Form von einem Konfigurationsdatensatz erfasst werden, wobei der Konfigurationsdatensatz Konfigurationseigenschaftsdaten enthält;
wobei der Konfigurationsdatensatz der kundenindividuellen Konfiguration mit dem Variantendatensatz der Variantenkonfigurationen verglichen wird;
wobei im Falle einer Übereinstimmung von Konfigurationseigenschaftsdaten der kundenindividuellen Konfiguration mit den Artikeleigenschaftsdaten des Variantendatensatzes die Kennungsdaten des Variantendatensatzes der kundenindividuellen Konfiguration des Konfigurationsdatensatzes zugewiesen wird
wobei im Falle keiner Übereinstimmung der Konfigurationseigenschaftsdaten der Konfiguration mit den Artikeleigenschaftsdaten des Variantendatensatzes eine Artikelreferenznummer generiert wird und der Konfiguration die generierte Artikelreferenznummer dynamisch zugewiesen wird.
